(19) Europäisches Patentamt
European Patent Office
Office européen des brevets

(11) **EP 4 162 227 B1**

(12) **EUROPÄISCHE PATENTSCHRIFT**

(45) Veröffentlichungstag und Bekanntmachung des Hinweises auf die Patenterteilung:
**10.07.2024  Patentblatt 2024/28**

(21) Anmeldenummer: **21726367.2**

(22) Anmeldetag: **10.05.2021**

(51) Internationale Patentklassifikation (IPC):
**F42B 33/00** *(2006.01)*     **G01M 1/34** *(2006.01)*
**G01M 1/12** *(2006.01)*

(52) Gemeinsame Patentklassifikation (CPC):
**F42B 33/00; G01M 1/122; G01M 1/34**

(86) Internationale Anmeldenummer:
**PCT/EP2021/062322**

(87) Internationale Veröffentlichungsnummer:
**WO 2021/244824 (09.12.2021 Gazette 2021/49)**

(54) **VERFAHREN ZUR REDUZIERUNG EINER UNWUCHT EINER GESCHOSSHÜLLE**

METHOD FOR REDUCING AN IMBALANCE OF A PROJECTILE SHELL

PROCÉDÉ DE RÉDUCTION D'UN DÉSÉQUILIBRE D'UNE ENVELOPPE DE PROJECTILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2020  DE 102020114842**

(43) Veröffentlichungstag der Anmeldung:
**12.04.2023  Patentblatt 2023/15**

(73) Patentinhaber: **Rheinmetall Waffe Munition GmbH 29345 Südheide (DE)**

(72) Erfinder:
• **KADUR, Thomas 29320 Hermannsburg (DE)**
• **KUFNER, Matthias 29320 Hermannsburg (DE)**
• **RADIES, Hendrik 29320 Hermannsburg (DE)**

(74) Vertreter: **DREISS Patentanwälte PartG mbB Friedrichstraße 6 70174 Stuttgart (DE)**

(56) Entgegenhaltungen:
**US-A- 4 116 404    US-A- 4 765 566**

EP 4 162 227 B1

**Beschreibung**

Die vorliegende Erfindung betrifft ein Verfahren zur Reduzierung einer Unwucht einer Geschosshülle. Entsprechende Geschosshüllen werden für Geschosse in unterschiedlichen Kalibern benötigt. Insbesondere bei Mittel- und Großkalibergeschossen geschieht die Herstellung dabei aus diversen Gründen durch einen Schmiedeprozess.

Sowohl die Innenkontur als auch die Außenkontur der Hülle werden durch diesen Schmiedeprozess definiert. Eine korrekte Innenkontur ist dabei notwendig um dem Geschoss ein Wirkmittel zufügen zu können.

Die Außenkontur wird herkömmlicherweise noch spanend nachbearbeitet, sodass die geforderten geometrischen Toleranzen erfüllt werden. Die Außenkontur besitzt somit nur kleine Abweichungen von der idealen geforderten Geometrie.

Die Innenkontur hingegen kann aufgrund der technischen Gegebenheiten nur in einem kleinen Umfang nahe des Mundlochs spanend bearbeitet werden. Das Mundloch ist dazu vorgesehen, das Wirkmittel in das Geschoss einbringen zu können, das Geschoss verschließen zu können und gegebenenfalls das Geschoss mit einem Hebemittel versehen zu können. Des Weiteren wird der An-/Zünder häufig im Mundloch positioniert.

Die Bearbeitung in dem kleinen Umfang nahe des Mundlochs kann sich darin begründen, dass das Mundloch, bei beispielsweise großer Hüllenlänge und kleinem Durchmesser, relativ klein ausfällt, und somit das Innere des Geschosses schwer zugänglich ist.

Dadurch besitzt die Innenkontur größere Abweichungen bezüglich der idealen Geometrie des Geschosses. Zusätzlich weist die Innenkontur bezüglich der bearbeiteten Außenkontur im Allgemeinen einen Radialversatz sowie einen Winkelversatz auf. Dies führt zu einer statischen sowie zu einer dynamischen Unwucht der Geschosshülle.

Diese Unwuchtanteile erhöhen die Streuung der Auftreffpunkte im Zielgebiet. Um diese Streuung zu verringern, ist man bestrebt, die Unwucht so gering wie möglich zu halten. Aus diesem Grund sind Toleranzen für die Unwucht auf der Fertigungszeichnung der Hülle vorgeschrieben. Um diese Toleranzen einzuhalten, werden bei der derzeitigen Fertigung gewisse Arbeitsschritte vorgenommen.

So werden beim Fertigdrehen der Außenkontur beispielsweise mittels Unterlegbleche die Geschosse außermittig eingespannt und überdreht, um unterschiedlich starke Wandstärken und somit sich ergebene Unwuchten ein wenig auszugleichen. Weiterhin werden die Hüllen durch einen manuellen Schleifprozess an der Innenseite des Geschosses im Bereich der gesamten Hülle bearbeitet.

Dabei wird lediglich an einer Position Material entfernt und nicht verteilt über die Oberfläche der Innenkontur. Allerdings unterliegt diese Ausgleichsmethode subjektiven Einflüssen der Bearbeiter. So erfolgt die Wahl der exzentrischen Aufspaltung empirisch von der gemessenen Unwucht. Das Ausschleifen an einer bestimmten Stelle in der Innenkontur erfolgt von Hand und unterliegt der subjektiven Einschätzung des Bearbeiters. Zwischen den Schleifprozessen ist ein Mehrfaches wiegen notwendig, um die vorgegeben zu entfernende Masse zu kontrollieren. Eine geringe Abweichung vom vorgegebenen Winkel kann das Ergebnis ruinieren und die Hülle unbrauchbar machen. Eine Nacharbeit ist nicht möglich, da es zu einer Gewichtsunterschreitung der Hülle kommen würde.

Somit ist die bekannte Vorgehensweise nicht prozesssicher und hängt stark von der Erfahrung des Bearbeiters ab. Weiterhin hat das Ausschleifen den Nachteil, dass örtlich die Wandstärke der Hülle stark reduziert wird.

Damit hat das derzeitig bekannte Verfahren aus technischer und kommerzieller Sicht erhebliche Defizite. Durch den Schleifprozess wird einseitig Material an der Innenseite der Hüllenwandung entnommen. Dies führt zu einer inhomogenen Wandstärke der Hülle. Dies hat gleich mehrere Nachteile. Als erstes kann es zu einer Unterschreitung der minimalen Wandstärke kommen, was zu einem Ausschuss wegen der Nichteinhaltung der Zeichnungstoleranzen führt. Des Weiteren führt diese verringerte Wandstärke zu einer Gefährdung der Abschussfestigkeit. Das Geschoss kann sich dabei beim Rohrdurchgang bereits zerlegen oder im Ziel zu einer nicht gewünschten Zerlegung führen.

Damit solche Szenarien ausgeschlossen werden können, müssen die Geschosshüllen vermessen werden. Dies kann durch eine Ultraschalluntersuchung, durch Röntgenprüfung o. ä. geschehen. US 4 765 566 A veröffentlicht ein Verfahren zur Reduzierung einer Unwucht einer Geschosshülle, wobei die Geschosshülle aus einem Körper besteht, welcher ein Mundloch und eine Ausnehmung aufweist, wodurch der Körper eine Innenwandung und eine Außenwandung aufweist, wobei das Mundloch mit der Ausnehmung verbunden ist.

Die vorliegende Erfindung hat dazu die Aufgabe, die vorgenannten Probleme und Nachteile aus dem Stand der Technik zu lösen. Das vorgeschlagene Verfahren beruht dabei auf mathematischen Grundlagen und kann durch definierte automatisierte Prozesse abgearbeitet werden. Die Prozesssicherheit wird dadurch erhöht. In einem Serienprozess ist der Unwuchtausgleich nicht mehr von subjektiven Fähigkeiten der Bearbeiter abhängig. Zudem lässt sich das Verfahren gut in den Fertigungsprozess integrieren.

Zudem werden technische Nachteile der zurzeit vorhandenen Prozesse behoben. Das erfindungsgemäße Verfahren beruht auf einer Angleichung der Wandstärken. Dies bedeutet, dass die Unwucht dadurch verringert wird, dass die Ungleichmäßigkeiten der Wandstärken reduziert werden. Dadurch kommt es nicht zu einer ungewünschten örtlichen Verringerung der Wandstärke, wie es bei den bereits vorhandenen Prozessen der Fall ist.

Das erfindungsgemäße Verfahren ist dabei insbesondere, aber nicht ausschließlich für die Fertigung von Drallgeschossen vorteilhaft.

Die Aufgabe wird durch die Merkmale des Anspruchs 1 gelöst. Dabei wird ein Verfahren zur Herstellung einer Geschosshülle vorgeschlagen, wobei die Geschosshülle einen Körper mit einer Ausnehmung aufweist. Die Ausnehmung bildet dabei die Innenkontur des Körpers, welche eine Innenwandung bildet. Die zugehörige Außenwandung wird durch die äußere Geometrie des Körpers gebildet.

Durch diese Ausgestaltung weist der Körper eine Innenwandung und eine Außenwandung auf, sowie ein Mundloch, welches mit der vorgenannten Ausnehmung verbunden ist. Durch das Mundloch ist also die Innenwandung des Körpers erreichbar.

Da das Geschoss für das erfindungsgemäße Verfahren im Wesentlichen länglich gestaltet ist, weist die Geschosshülle eine Mittelachse auf. Die Unwucht der Geschosshülle wird erfindungsgemäß vor der spanenden Bearbeitung durch eine Messung ermittelt. Aus dem Ergebnis zur gemessenen Unwucht wird eine zur vorhandenen Mittelachse verschobene Achse errechnet. Diese modifizierte Achse kann dabei parallel verschoben zur Mittelachse ausgeführt sein, um einen gemeinsamen Punkt verschwenkt sein oder eine Kombination aus beiden sein.

Wird nun der Körper um die neu berechnete, modifizierte Achse z.B. in einer Drehbank oder Schleifmaschine rotiert und erfährt dabei eine mechanische Bearbeitung der Außenkontur, so wird die Unwucht der Geschosshülle durch die ungleichmäßige Wandstärkenreduzierung reduziert. Eine solche mechanische Bearbeitung kann beispielsweise spanend geschehen, aber auch Schleifen kann eine solche mechanische Bearbeitung darstellen.

Der Grundgedanke dieses Verfahrens basiert auf einer Verschiebung und/oder Verkippung der Drehachse, welche für die Bearbeitung der Geschosshülle genutzt wird. Die Drehachse muss dabei so gewählt werden, dass nach dem Bearbeiten der Außenkontur die Unwucht möglichst vollständig verschwindet.

Zum Einspannen des Körpers in eine entsprechende Vorrichtung mit der Zielsetzung der Rotation des Körpers müssen zunächst zwei neue Mittelpunkte berechnet werden. Ein Mittelpunkt wird dabei am Heck des Geschosses vorgesehen und ein weiterer am Mundloch.

Mathematisch können diese neuen Mittelpunkte aus der gemessenen Unwucht und den Eigenschaften der Geschosshülle errechnet werden. Zur Fertigbearbeitung der Geschosshülle muss diese zur Verwendung der modifizierten Drehachse vorbearbeitet werden. Hierzu kann zum Beispiel die Hülle durch ein Fräsverfahren bearbeitet werden, bei welchem die späteren Spannflächen mit den neuen Mittelpunkten erzeugt werden.

Nach der Fräsbearbeitung wird die Geschosshülle mit angepassten Spannflächen auf eine entsprechende Vorrichtung für die rotierende Fertigbearbeitung gespannt. In dieser Aufspannung wird die Außenkontur der Geschosshülle nachfolgend fertig bearbeitet.

Somit benötigt das erfindungsgemäße Verfahren die folgenden Schritte:

- Messung der Unwucht;

- Berechnung der Verschiebung der Mittelpunkte an Heck und Mundloch;

- gegebenenfalls Erzeugung der neuen Spannflächen;

- mechanische Fertigbearbeitung der Außenkontur.

Ein Nachschleifen der Innenkontur entfällt beim erfindungsgemäßen Verfahren komplett.

Messungen zur Unwucht sind aus dem Stand der Technik bereits hinlänglich bekannt, da sie auch mit dem herkömmlichen Verfahren aus dem Stand der Technik durchgeführt werden müssen.

Zur Berechnung der Verschiebung der Mittelachsen wird die Geschosshülle, bzw. der Körper der Geschosshülle im Allgemeinen als ein schalenartiger, axialsymmetrischer Körper aufgefasst. Da der Körper eine Ausnehmung aufweist, welche die Innenkontur des Körpers darstellt, kann der Körper dabei als Differenz von zwei massiven Vollkörpern verstanden werden.

Der erste Vollkörper entspricht dabei der Außenkontur des Körpers der Geschosshülle und der zweite Vollkörper entspricht dabei einem Körper, der die Innenkontur des Körpers ausfüllen würde. Der Innenkörper entspricht dabei dem Volumen der Ausnehmung des realen Körpers. Mathematisch kann die Geschosshülle als Differenz des ersten Vollkörpers (Außenkontur) und des zweiten Vollkörpers (Innenkontur) dargestellt werden.

Dazu können insbesondere Eigenschaften des Innenkörpers wie Masse, Trägheit, Schwerpunkt und Unwucht aus den bekannten und zu messenden Maßen des Außenkörpers errechnet werden:

$$m_i = m_a - m$$

$$x_{SP_i} = \frac{x_{SP_a} * m_a - x_{SP} * m}{m_i}$$

$$\Theta_i = \Theta_a - \Theta$$

Dabei ist $m$ als Masse anzusehen, $x_{SP}$ als Position des Schwerpunkts und $\Theta$ als Trägheitstensor. Die Indizes i und a verdeutlichen die Zugehörigkeit zum Innenkörper bzw. zum Außenkörper. Angaben ohne Indizes beziehen sich auf den realen Körper der erfindungsgemäßen Geschosshülle.

Mit der Kenntnis der Masse, der Position des Schwerpunktes sowie dem Trägheitstensor des Innenkörpers können dessen Hauptträgheitsachsen bestimmt werden. Dabei ist es unerheblich, welche genaue Form der Innenkörper besitzt und welche Unregelmäßigkeiten er aufweist. Die Unwucht der fertigen Geschosshülle verschwindet dabei nach Nachbearbeitung vollständig, falls die Drehachse der Außenkontur mit der Längs-Hauptträgheitsachse des Innenkörpers übereinstimmt. Mathematisch ist diese Aufgabe exakt lösbar. Durch Messungenauigkeiten und Fertigungstoleranzen kann eine gewisse Restunwucht verbleiben, welche jedoch innerhalb der Toleranz verbleibt.

Durch die Kenntnis der Position des Schwerpunkts und die Richtung der Längs-Hauptträgheitsachse des Innenkörpers können die Mittelpunkte an Heck und Mundloch der Geschosshülle ermittelt werden, welche für die Fertigbearbeitung der Hülle verwendet werden müssen, um die Unwucht der Geschosshülle zu beseitigen. Mit diesen errechneten Werten zur Verschiebung der Mittelachse werden am Heck und am Mundloch Spannflächen, beispielsweise mittels eines Fräsprozesses mit entsprechenden Verschiebungen gefräst.

Nachdem die außermittigen Spannflächen an dem Körper der Geschosshülle angeordnet wurden, kann die Hülle an der Außenkontur fertigbearbeitet werden. Dabei wird die Hülle mit den Spannflächen beispielsweise in einer Drehmaschine aufgespannt und die Außenkontur mechanisch fertig bearbeitet. Nach dieser Bearbeitung ist die Unwucht der Geschosshülle auf ein Minimum reduziert.

Die mechanische Fertigbearbeitung des rotierenden Körpers kann als zerspanendes Drehverfahren ausgeführt sein, beispielsweise auf einer Drehmaschine.

Die modifizierte Achse kann durch die vorgenannte Berechnung zur Mittelachse derart verschoben sein, dass beide Achsen einen gemeinsamen Mittelpunkt am Mundloch, beispielsweise im Zentrum des Mundlochs aufweisen, die modifizierte Achse kann aber auch derart zur Mittelachse verschoben sein, dass kein gemeinsamer Mittelpunkt gefunden wird.

Das Verfahren ist insbesondere für Geschosse im Mittel- und Großkaliberbereich von Vorteil, da der Körper dieser Geschosshüllen häufig einteilig ausgeführt ist. Der Körper kann jedoch auch zusammengesetzt ausgeführt sein und besteht vorzugsweise aus Metall.

In einer besonderen Ausführung kann die Unwucht des Körpers während einer Rotation des Körpers gemessen werden. Dadurch wird überprüft, ob und wie weit die Unwucht während der Nachbearbeitung eliminiert wurde.

Weitere Merkmale ergeben sich aus den beigefügten Zeichnungen. Es zeigen:

Figur 1: Querschnitt einer erfindungsgemäßen Geschosshülle;

Figur 2: Querschnitt einer erfindungsgemäßen Geschosshülle mit Unwucht;

Figur 3: Zur Rotation eingespannte, erfindungsgemäße Geschosshülle.

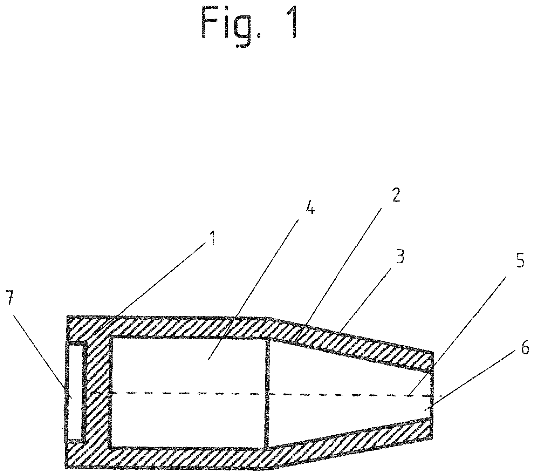

Figur 1 zeigt eine erfindungsgemäße Geschosshülle, welche üblicherweise aus einem Köper 1 aus Metall besteht und in einem Schmiedeprozess gefertigt wurde. Dazu weist der Körper 1 eine Innenwandung 2 und ein Außenwandung 3 auf. Die Innenwandung 2 wird durch eine Ausnehmung 4 gebildet, welche eine ähnliche geometrische Form aufweist, wie der Körper 1.

Durch die Ausnehmung 4 entsteht eine Innenkontur im Körper 1, mit der Innenwandung 2 als Begrenzung im Körper 1. Durch die Geometrie des Körpers 1 weist dieser eine Mittelachse 5 auf, welche sich auch durch die Ausnehmung 4 erstreckt.

Das erfindungsgemäße Geschoss umfasst weiterhin ein Mundloch 6 sowie ein Heck 7. Das Heck 7 bildet dabei am Boden des Geschosses einen Abschluss. Das Mundloch 6 ist an der gegenüberliegenden Seite des Hecks 7 angeordnet und sorgt für einen Zugang zur Ausnehmung 4.

Durch das Mundloch 6 kann die Ausnehmung bspw. befüllt werden oder das Geschoss kann mittels einer Hebehilfe, welche am Mundloch angebracht wird, transportiert werden.

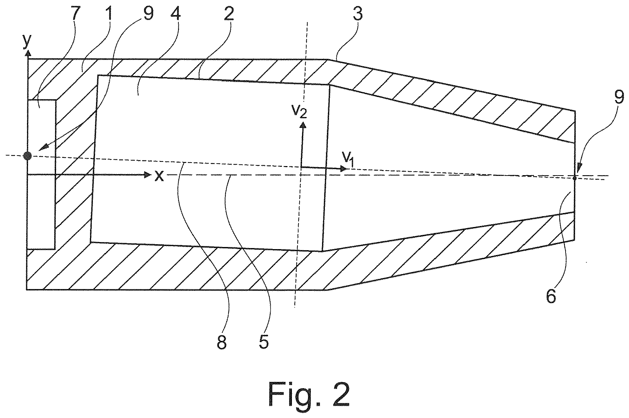

Erfindungsgemäß wird nun in Figur 2 eine modifizierte Achse 8 berechnet. Dazu wird zunächst ein Innenkörper berechnet, welcher dem Volumen der Ausnehmung 4 entspricht und aus dem gleichen Material gefertigt ist, wie der Körper 1. Ebenso wird ein Außenkörper berechnet, welcher der Geometrie des Körpers 1 entspricht, jedoch massiv ausgestaltet ist und keine Ausnehmung 4 aufweist.

Mittels des realen Körpers 1 und der berechneten Innen- und Außenkörper kann nun die Längs-Hauptträgheitsachse berechnet werden. Dazu wird zunächst die Position des Schwerpunkts des Innenkörpers berechnet sowie die zugehörige Masse und der zugehörige Trägheitstensor. Daraus wird dann die modifizierte Achse 8 hergeleitet.

Die modifizierte Achse 8 ist gegenüber der Mittelachse 5 verschoben, was in Figur 2 durch den Versatz ($v_1$ und $v_2$) erkenntlich ist. Die modifizierte Achse 8 ist dabei exemplarisch zu betrachten und verläuft bei jeder Geschosshülle je nach Unwucht unterschiedlich.

Mittels der modifizierten Achse 8 werden an Heck 7 und Mundloch 6 jeweils Mittelpunkte 9 berechnet, an welchen eine Rotation der Geschosshülle durchgeführt wird. Dabei kann auch ein Mittelpunkt, bspw. am Mundloch mit dem Mittelpunkt der Mittelachse 5 übereinstimmen.

Soll die anschließende Rotation des Körpers 1 auf einer Drehmaschine durchgeführt werden, muss nun um die Mittelpunkte jeweils eine Spannfläche erzeugt werden. Dies wird vorzugsweise durch ein Fräsverfahren durchgeführt.

Anschließend wird der Körper 1 um die modifizierte Achse 8 rotiert, um mechanisch bearbeitet zu werden.

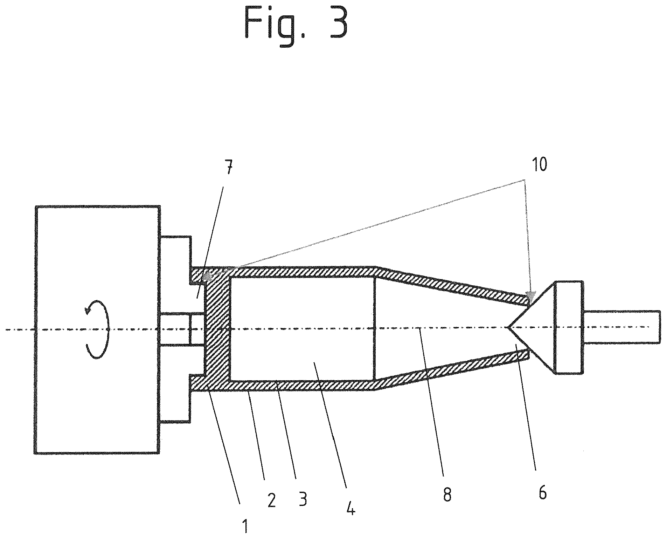

Eine solche Bearbeitung ist in Figur 3 dargestellt. Hier wird der Körper 1 in eine Drehmaschine gespannt, mittels der um die Mittelpunkte angeordneten außermittigen Spannflächen 10. Nach dem Einspannen wird der Körper 1 um die modifizierte Mittelachse 8 rotiert und mechanisch bearbeitet.

Eine solche mechanische Bearbeitung kann durch ein spanabhebendes Verfahren geschehen, bspw. mittels eines Drehverfahrens bzw. Fräsverfahrens. Der Körper 1 kann aber auch durch Schleifen oder einem anderen materialabtragenden Verfahren bearbeitet werden.

Nach der erfolgten Bearbeitung des rotierenden Körpers ist die Unwucht minimiert, mindestens so weit, dass sie innerhalb der vorgegeben Toleranzen liegt. Ein zusätzliches Ausschleifen der Innenkontur entfällt dabei komplett.

Die vorliegende Erfindung ist nicht auf die vorgenannten Merkmale beschränkt, vielmehr sind weitere Ausführungen im Rahmen der Merkmale des Anspruchs 1 denkbar. So könnte der Köper eine unterschiedliche Außen- und Innenkontur aufweisen. Wichtig ist hierbei für das Verfahren lediglich, dass sich der Innenkörper aus der bekannten Außengeometrie und der gemessenen Unwucht errechnen lässt. Weiterhin kann die Ausnehmung mit einem Penetrator statt einem Wirkmittel befüllt werden. Zuletzt wäre die Messung der Unwucht durch ein Rotationsverfahren denkbar.

**BEZUGSZEICHEN**

1 Körper
2 Innenwandung
3 Außenwandung
4 Ausnehmung
5 Mittelachse
6 Mundloch
7 Heck
8 modifizierte Achse
9 Mittelpunkte
10 außermittige Spannfläche

**Patentansprüche**

1. Verfahren zur Reduzierung einer Unwucht einer Geschosshülle,

    wobei die Geschosshülle aus einem Körper (1) besteht, welcher
    ein Mundloch (6) und eine Ausnehmung (4) aufweist,
    wodurch der Körper eine Innenwandung (2) und eine Außenwandung (3) aufweist, wobei das Mundloch (6) mit der Ausnehmung (4) verbunden ist,
**dadurch gekennzeichnet,**
**dass** durch die äußere geometrische Form der Geschosshülle eine Mittelachse (5) errechnet wird,
**dass** danach eine Messung auf Unwucht der Geschosshülle durchgeführt wird,
**dass** durch die Unwucht eine zur Mittelachse (5) modifizierte Achse (8) errechnet wird und dass aufgrund der errechneten modifizierten Achse (8) der Körper (1) um die modifizierte Achse (8) rotiert wird, wobei der rotierende Körper (1) eine mechanische Bearbeitung erfährt.

2. Verfahren nach Anspruch 1, **dadurch gekennzeichnet, dass** die mechanische Bearbeitung des rotierenden Körpers (1) als zerspanendes Drehverfahren ausgeführt wird.

3. Verfahren nach Anspruch 1 oder 2, **dadurch gekennzeichnet, dass** der Körper (1) ein Heck (7) aufweist und durch die modifizierte Achse (8) zwei Mittelpunkte (9) an Heck (7) und Mundloch (6) berechnet werden.

4. Verfahren nach Anspruch 3, **dadurch gekennzeichnet, dass** an Heck (7) und Mundloch (6) zwei außermittige Spannflächen (10) erzeugt werden, wobei die Mittelpunkte (9) im Zentrum der außermittigen Spannflächen (10) angeordnet sind.

5. Verfahren nach Anspruch 4, **dadurch gekennzeichnet, dass** die Erzeugung der außermittigen Spannflächen (10) durch ein Fräsverfahren geschieht.

6. Verfahren nach einem der Ansprüche 1 bis 5, **dadurch gekennzeichnet, dass** der Körper (1) zur Rotation um die modifizierte Achse (8) in eine Drehmaschine eingespannt wird.

7. Verfahren nach einem der Ansprüche 1 bis 6, **dadurch gekennzeichnet, dass** die modifizierte Achse (8) und die Mittelachse (5) einen gemeinsamen Mittelpunkt im Zentrum des Mundloches (6) aufweisen.

8. Verfahren nach einem der Ansprüche 1 bis 7, **dadurch gekennzeichnet, dass** die Geschosshülle als axialsymmetrischer Körper (1) ausgeführt ist.

9. Verfahren nach einem der Ansprüche 1 bis 8, **dadurch gekennzeichnet, dass** der Körper (1) einstückig ausgeführt ist.

10. Verfahren nach einem der Ansprüche 1 bis 9, **dadurch gekennzeichnet, dass** der Körper (1) aus Metall besteht.

**11.** Verfahren nach Anspruch 9, **dadurch gekennzeichnet, dass** der Körper (1) in einem Schmiedeverfahren gefertigt wird.

**12.** Verfahren nach einem der Ansprüche 1 bis 11, **dadurch gekennzeichnet, dass** ein Innenkörper berechnet wird, nämlich als massiver Körper aus dem gleichen Material des Körpers (1), welcher dem Volumen der Ausnehmung (4) entspricht.

**13.** Verfahren nach Anspruch 12, **dadurch gekennzeichnet, dass** zur Errechnung der verschobenen Achse die Masse, die Position des Schwerpunkts sowie der Trägheitstensor des Innenkörpers einbezogen werden.

**14.** Verfahren nach einem der Ansprüche 1 bis 13, **dadurch gekennzeichnet, dass** die Messung der Unwucht während der Rotation des Körpers (1) durchgeführt wird.

**15.** Verfahren nach einem der Ansprüche 1 bis 14, **dadurch gekennzeichnet, dass** die Geschosshülle für ein Drallgeschoss verwendet wird.

**Claims**

**1.** Method for reducing the imbalance of a projectile casing,

the projectile casing consisting of a body (1) which has an opening (6) and a recess (4), whereby the body has an inner wall (2) and an outer wall (3), the opening (6) being connected to the recess (4), **characterized in that** a central axis (5) is calculated from the outer geometric shape of the projectile casing, **in that** a measurement with respect to imbalance of the projectile casing is then carried out, **in that**, based on the imbalance, an axis (8) which is modified with respect to the central axis (5) is calculated and in that, based on the calculated modified axis (8), the body (1) is rotated about the modified axis (8), the rotating body (1) undergoing mechanical processing.

**2.** Method according to claim 1, **characterized in that** the mechanical processing of the rotating body (1) is carried out as a machining turning process.

**3.** Method according to claim 1 or 2, **characterized in that** the body (1) has a tail (7) and two center points (9) at the tail (7) and opening (6) are calculated by the modified axis (8).

**4.** Method according to claim 3, **characterized in that** two eccentric clamping surfaces (10) are produced on the tail (7) and opening (6), the center points (9) being arranged in the center of the eccentric clamping surfaces (10).

**5.** Method according to claim 4, **characterized in that** the eccentric clamping surfaces (10) are produced by a milling process.

**6.** Method according to any of claims 1 to 5, **characterized in that** the body (1) is clamped in a lathe for rotation about the modified axis (8).

**7.** Method according to any of claims 1 to 6, **characterized in that** the modified axis (8) and the central axis (5) have a common center point in the center of the opening (6) .

**8.** Method according to any of claims 1 to 7, **characterized in that** the projectile casing is designed as an axially symmetric body (1).

**9.** Method according to any of claims 1 to 8, **characterized in that** the body (1) is designed as a single piece.

**10.** Method according to any of claims 1 to 9, **characterized in that** the body (1) is made of metal.

**11.** Method according to claim 9, **characterized in that** the body (1) is manufactured in a forging process.

**12.** Method according to any of claims 1 to 11, **characterized in that** an inner body is calculated, namely as a solid body made of the same material as the body (1), which corresponds to the volume of the recess (4) .

**13.** Method according to claim 12, **characterized in that** the mass, the position of the center of gravity and the inertia tensor of the inner body are taken into account to calculate the displaced axis.

**14.** Method according to any of claims 1 to 13, **characterized in that** the imbalance is measured during the rotation of the body (1).

**15.** Method according to any of claims 1 to 14, **characterized in that** the projectile casing is used for a spin projectile.

**Revendications**

**1.** Procédé permettant de réduire le déséquilibre d'une enveloppe de projectile,

dans lequel l'enveloppe de projectile est constituée d'un corps (1) qui présente un trou d'embouchure (6) et un évidement (4),

moyennant quoi le corps présente une paroi interne (2) et une paroi externe (3), dans lequel le trou d'embouchure (6) est relié à l'évidement (4), **caractérisé en ce qu'**

un axe central (5) est calculé par la forme géométrique extérieure de l'enveloppe de projectile, qu'une mesure du déséquilibre de l'enveloppe de projectile est ensuite effectuée,

qu'un axe (8) modifié par rapport à l'axe central (5) est calculé au moyen du déséquilibre et que, sur la base de l'axe (8) modifié calculé, le corps (1) est mis en rotation autour de l'axe (8) modifié, dans lequel le corps (1) en rotation est soumis à un usinage mécanique.

2. Procédé selon la revendication 1, **caractérisé en ce que** l'usinage mécanique du corps (1) en rotation est réalisé sous la forme d'un procédé de tournage avec enlèvement de copeaux.

3. Procédé selon la revendication 1 ou 2, **caractérisé en ce que** le corps (1) présente une extrémité arrière (7) et deux points centraux (9) au niveau de l'extrémité arrière (7) et au niveau du trou d'embouchure (6) sont estimés au moyen de l'axe (8) modifié.

4. Procédé selon la revendication 3, **caractérisé en ce que** deux surfaces de serrage excentrées (10) sont produites au niveau de l'extrémité arrière (7) et au niveau du trou d'embouchure (6), dans lequel les points centraux (9) sont disposés au centre des surfaces de serrage excentrées (10).

5. Procédé selon la revendication 4, **caractérisé en ce que** la production des surfaces de serrage excentrées (10) se fait au moyen d'un procédé de fraisage.

6. Procédé selon l'une des revendications 1 à 5, **caractérisé en ce que** le corps (1) est serré dans un tour pour tourner autour de l'axe (8) modifié.

7. Procédé selon l'une des revendications 1 à 6, **caractérisé en ce que** l'axe (8) modifié et l'axe central (5) présentent un point central commun au centre du trou d'embouchure (6).

8. Procédé selon l'une des revendications 1 à 7, **caractérisé en ce que** l'enveloppe de projectile est réalisée sous la forme d'un corps (1) à symétrie axiale.

9. Procédé selon l'une des revendications 1 à 8, **caractérisé en ce que** le corps (1) est réalisé d'une seule pièce.

10. Procédé selon l'une des revendications 1 à 9, **ca-**

**ractérisé en ce que** le corps (1) est constitué de métal.

11. Procédé selon la revendication 9, **caractérisé en ce que** le corps (1) est fabriqué lors d'un procédé de forgeage.

12. Procédé selon l'une des revendications 1 à 11, **caractérisé en ce qu'**un corps interne est estimé, à savoir comme corps massif constitué du même matériau que celui du corps (1) et correspondant au volume de l'évidement (4).

13. Procédé selon la revendication 12, **caractérisé en ce que**, pour le calcul de l'axe déplacé, la masse, la position du centre de gravité ainsi que le tenseur d'inertie du corps interne sont inclus.

14. Procédé selon l'une des revendications 1 à 13, **caractérisé en ce que** la mesure du déséquilibre est effectuée pendant la rotation du corps (1).

15. Procédé selon l'une des revendications 1 à 14, **caractérisé en ce que** l'enveloppe de projectile est utilisée pour un projectile stabilisé par rotation.

# Fig. 1

Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4765566 A